# EUROPEAN PATENT SPECIFICATION

(11) **EP 4 108 736 B1**
(45) Date of publication and mention of the grant of the patent: **02.12.2026**
(21) Application number: 22180046.9
(22) Date of filing: 21.06.2022
(51) Int. Cl.: C09K 11/77

(54) **PHOTONIC MARKERS ENABLING SECURITY MARKING, PRODUCT IDENTIFICATION, AND MATERIAL SORTING USING LOW FRAME RATE CAMERAS**
PHOTONISCHE MARKER ZUR ERMÖGLICHUNG VON SICHERHEITSMARKIERUNG, PRODUKTIDENTIFIKATION UND MATERIALSORTIERUNG MIT KAMERAS MIT NIEDRIGER BILDRATE
MARQUEURS PHOTONIQUES PERMETTANT LE MARQUAGE DE SÉCURITÉ, L'IDENTIFICATION DES PRODUITS ET LE TRI DES MATÉRIAUX À L'AIDE DE CAMÉRAS À FAIBLE FRÉQUENCE D'IMAGES

(30) Priority: 22.06.2021 DE 102021003206
(43) Date of publication of application: 28.12.2022
(73) Proprietor: Karlsruher Institut für Technologie, 76131 Karlsruhe (DE)
(72) Inventor: HOWARD, Ian, 76137 Karlsruhe (DE); LI, Kai, 76133 Karlsruhe (DE); NGEI, Katumo, 76344 Eggenstein-Leopoldshafen (DE); RICHARDS, Bryce, 76297 Stutensee (DE); TURSHATOV, Andrey, 64347 Griesheim (DE); BUSKO, Dmitry, 76646 Bruchsal (DE)
(74) Representative: Müller-Boré & Partner Patentanwälte PartG mbB

(56) References cited:
- WO-A1-99/51703
- JP-A- H04 358 134
- US-A1- 2003 034 729
- MA JIAN ET AL: "Microwave-promoted pure host phase for red emission CaS:Euphosphor from single CaSOprecursor and the photoluminescence property", CHINESE PHYSICS B, CHINESE PHYSICS B, BRISTOL GB, vol. 23, no. 8, 31 July 2014 (2014-07-31), pages 87808, XP020268428, ISSN: 1674-1056, [retrieved on 20140731], DOI: 10.1088/1674-1056/23/8/087808
- SHOSAKU TANAKA ET AL: "PHOTO-INDUCED TRANSFERRED CHARGE IN RARE-EARTH-DOPED ALKALINE-EARTH SULFIDE ELECTROLUMINESCENT THIN FILMS", JAPANESE JOURNAL OF APPLIED PHYSICS, JAPAN SOCIETY OF APPLIED PHYSICS, JP, vol. 30, no. 6A PART 02, 1 June 1991 (1991-06-01), pages L1021 - L1024, XP000236709, ISSN: 0021-4922, DOI: 10.1143/JJAP.30.L1021

## Description

The present invention relates to a system, method and computer-program product for evaluating the photoluminescence of a photonic marker.

Photonic markers are used in different fields of technology for various applications. In some applications, the photoluminescence lifetime of the photonic markers is evaluated. In order to do so, specialized detectors, such as high-speed cameras, are usually required which are capable of detecting the photoluminescence intensity of the photonic markers in a time-resolved manner. So far, evaluating the photoluminescence lifetime of photonic markers which are commercially available is often associated with high costs and complicated handling.

In this context, WO 99/51703 A1 describes long persistence red phosphors. Further, US 2003/034729 A1 describes a phosphor thin film and an electroluminescent panel. Moreover, Japanese Journal of Applied Physics 1991, 30, L1021-L1024 (DOI: 10.1143/jjap.30.l1021) describes photo-induced transferred charge in rare-earth-doped alkaline-earth sulfide electroluminescent thin films. Besides, JP H04 358134 A describes an infrared-visible transforming element.

In one aspect, the present invention provides a system for evaluating the photoluminescence of a photonic marker, the system comprising:
at least one photonic marker comprising a host material selected from the group consisting of CaS and Ba_{y}Sr_{1-y}S where 0 ≤ y ≤ 1, preferably 0 ≤ y ≤ 0.5, wherein the host material is doped with Eu²⁺;
an excitation unit configured to excite the at least one photonic marker so that the at least one photonic marker emits photoluminescence, the intensity of which decays over time, wherein the excitation unit is a pulsed light source having an excitation wavelength in the range of from 300 to 700 nm; and
a detection unit configured to detect the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

Herein, Eu²⁺ is also referred to as the dopant.

Herein, the photoluminescence intensity which decays over time is also referred to as time-resolved photoluminescence intensity.

As already mentioned, the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, preferably 0.0005 ≤ x ≤ 0.015, respectively, such that there is a photoluminescence lifetime of the photonic marker in the range of from 0.001 to 10 s, preferably in the range of from 0.01 to 1 s, at room temperature.

Herein, the photoluminescence lifetime is to be understood as the time at which the photoluminescence intensity of the photonic marker reaches a value of 1/e = 36.8% of the initial photoluminescence intensity in a given time window. Room temperature is to be understood herein as a temperature of 25°C.

The host material doped with Eu²⁺ may be codoped with at least one codopant selected from the group consisting of Ln³⁺, Mn²⁺, Mn⁴⁺, Cr³⁺, Bi³⁺, Pb²⁺, Cu⁺, Hf⁴⁺, Zr⁴⁺, Ti⁴⁺, and Ti³⁺.

Herein, Ln³⁺ means a trivalent lanthanide ion selected from the group consisting of La³⁺, Ce³⁺, Pr³⁺, Nd³⁺, Sm³⁺, Gd³⁺, Tb³⁺, Dy³⁺, Ho³⁺, Er³⁺, Tm³⁺, Yb³⁺, Y³⁺, and Lu³⁺.

The concentration of the at least one codopant may be in the range of from 0.01 to 10 mol% with respect to the alkaline earth metal(s) constituting the host material, which means that 0.01 to 10 mol% of the alkaline earth metal(s) constituting the host material may be substituted with the at least one codopant.

As already mentioned, the detection unit is a video camera having a frame rate of equal to or more than 20 fps and equal to or less than 2000 fps, preferably equal to or more than 20 fps and equal to or less than 1000 fps (fps = frames per second = frames x Hz).

The system may further comprise:
a determination unit configured to determine the authenticity of a sample to which the at least one photonic marker is added by comparing the time-resolved photoluminescence intensity of the at least one photonic marker with a predetermined photoluminescence profile of the at least one photonic marker at a given temperature.

Herein, the at least one photonic marker which usually has a powdery form may be added to the sample, i.e., to an item to be marked, by any means known in the art. For example, the at least one photonic marker may be introduced into or onto the item to be marked. The photonic marker may be introduced into or onto the item to be marked in a variety of forms including an ink, varnish, or glue. It may also be introduced into or onto the bulk of the material constituting the item to be marked, for example by extrusion processes, injection molding, or 3D printing. When introduced into or onto (the bulk of the material constituting) the item to be marked, the photonic marker can form spots being part of a label marking the item. Preferably, the spot size is from 0.1 to 100 µm, more preferably from 0.5 to 50 µm.

As already mentioned, at least one of the light source and the video camera is part of a portable electronic device, in particular a mobile phone, e.g., a smartphone, or a tablet computer.

As already mentioned, the excitation unit is a pulsed light source having an excitation wavelength in the range of from 300 to 700 nm, e.g., with a central wavelength at 450 nm. The pulsed light source may be a light-emitting diode (LED), e.g., a smartphone flash.

In another aspect, the present invention provides a method for evaluating the photoluminescence of a photonic marker, the method comprising the steps of:
providing at least one photonic marker comprising a host material selected from the group consisting of CaS and Ba_{y}Sr_{1-y}S where 0 ≤ y ≤ 1, preferably 0 ≤ y ≤ 0.5, wherein the host material is doped with Eu²⁺;
exciting, by an excitation unit, the at least one photonic marker so that the at least one photonic marker emits photoluminescence, the intensity of which decays over time, wherein the excitation unit is a pulsed light source having an excitation wavelength in the range of from 300 to 700 nm; and
detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

The method may further comprise the step of:
determining the authenticity of a sample to which the at least one photonic marker is added by comparing the time-resolved photoluminescence intensity of the at least one photonic marker with a predetermined photoluminescence profile of the at least one photonic marker at a given temperature.

In a further aspect, the present invention provides a computer-program product for evaluating the photoluminescence of a photonic marker, wherein the computer-program product comprises computer-readable instructions, which when loaded and run by a processor of an electronic device, cause the electronic device to perform a method comprising the steps of:
generating and outputting an excitation signal to an excitation unit for exciting at least one photonic marker comprising a host material selected from the group consisting of CaS and Ba_{y}Sr_{1-y}S where 0 ≤ y ≤ 1, preferably 0 ≤ y ≤ 0.5, wherein the host material is doped with Eu²⁺, so that the at least one photonic marker emits photoluminescence, the intensity of which decays over time, wherein the excitation unit is a pulsed light source having an excitation wavelength in the range of from 300 to 700 nm; and
detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

The computer-program product and the method to which it relates may further comprise the step of:
determining, by a determination unit, the authenticity of a sample to which the at least one photonic marker is added by comparing the time-resolved photoluminescence intensity of the at least one photonic marker with a predetermined photoluminescence profile of the at least one photonic marker at a given temperature.

As surprisingly found by the present inventors, by doping a specific host material, i.e., CaS or Ba_{y}Sr_{1-y}S where 0 ≤ y ≤ 1, preferably 0 ≤ y ≤ 0.5, with a specific dopant, i.e., divalent europium ions (Eu²⁺), at a specific dopant concentration, i.e., such that the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, preferably 0.0005 ≤ x ≤ 0.015, respectively, it is possible to obtain a photonic marker with a tailored variety of photoluminescence lifetimes in the order of 10⁰ to 10⁴ milliseconds, preferably in the order of 10¹ to 10³ milliseconds. Advantageously, said photonic marker can be used in one or more of security marking, product identification, and material sorting without causing high costs and requiring complicated handling. In particular, low cost and easy-to-handle excitation and detection units may be suitably used in these applications for evaluating the photoluminescence of the photonic marker.
Figure 1 shows the photoluminescence excitation spectrum and the emission spectrum of both Sr_{0.998}S:Eu²⁺_{0.002} (left side) and Ca_{0.999}S:Eu²⁺_{0.001} (right side).
Figure 2 shows the emission spectrum of both Sr_{0.999}S:Eu²⁺_{0.001} (left side) and Ca_{0.999}S: Eu²⁺_{0.001} (right side) for prompt and delayed emission.
Figure 3 shows representative X-ray diffraction patterns of both SrS doped with Eu²⁺ (left side) and CaS doped with Eu²⁺ (right side) for different dopant concentrations.
Figure 4 shows the photoluminescence intensity of both SrS doped with Eu²⁺ (left side) and CaS doped with Eu²⁺ (right side) as a function of the time on a logarithmic scale for different dopant concentrations.
Figure 5 shows the photoluminescence lifetime of both SrS doped with Eu²⁺ (left side) and CaS doped with Eu²⁺ (right side) as a function of the dopant concentration.
Figure 6 shows a linear regression of the photoluminescence lifetime for both SrS doped with Eu²⁺ (left side) and CaS doped with Eu²⁺ (right side) as shown in Figure 5.
Figure 7 shows the photoluminescence quantum yield of both SrS doped with Eu²⁺ (left side) and CaS doped with Eu²⁺ (right side) as a function of the dopant concentration.
Figure 8 shows the emission spectrum of (Ba_{y}Sr_{1-y})_{0.999}S:Eu²⁺_{0.001} for different concentrations of barium in the host material.
Figure 9 shows the photoluminescence excitation spectrum of (Ba_{y}Sr_{1-y})_{0.999}S:Eu²⁺_{0.001} for different concentrations of barium in the host material (left side), in particular for y = 0, y = 0.5, and y = 1 (right side).
Figure 10 shows representative X-ray diffraction patterns of (Ba_{y}Sr_{1-y})_{0.999}S:Eu²⁺_{0.001} for different concentrations of barium in the host material.
Figure 11 shows the photoluminescence intensity of (Ba_{y}Sr_{1-y})_{0.999}S:Eu²⁺_{0.001} as a function of the time on a logarithmic scale for different concentrations of barium in the host material.
Figure 12 shows the photoluminescence lifetime of (Ba_{y}Sr_{1-y})_{0.999}S:Eu²⁺_{0.001} as a function of the concentration of barium in the host material.
Figure 13 shows the photoluminescence quantum yield of (Ba_{y}Sr_{1-y})_{0.999}S:Eu²⁺_{0.001} as a function of the concentration of barium in the host material.
Figure 14 shows video frames of the time-resolved photoluminescence intensity of an exemplary photonic marker along with the excitation intensity as a function of the number of video frames.
Figure 15 shows a schematic system with three exemplary photonic markers added to a sample.
Figure 16 shows video frames of the time-resolved photoluminescence intensity of three exemplary photonic markers having different photoluminescence lifetimes along with a reference photonic marker.
Figure 17 shows the photoluminescence intensity of both SrS doped with Eu²⁺ (left side) and CaS doped with Eu²⁺ (right side) as a function of the time on a logarithmic scale along with labels t₀, t₁, and t₂ for determining the photoluminescence lifetime.
Figure 18 shows the selection of t₂ as the time at which 90% of the total area is reached for both SrS doped with Eu²⁺ (left side) and CaS doped with Eu²⁺ (right side) as shown in Figure 17.

In the following, a detailed description of examples will be given with reference to the drawings. It should be understood that various modifications to the examples may be made. In particular, one or more elements of one example may be combined and used in other examples to form new examples.

The photonic marker described herein comprises a host material selected from the group consisting of CaS and Ba_{y}Sr_{1-y}S where 0 ≤ y ≤ 1, wherein the host material is doped with Eu²⁺. In other words, the photonic marker described herein is a specific alkaline earth metal sulfide doped with Eu²⁺, also sometimes referred to herein as alkaline earth metal sulfide phosphor. That is, the alkaline earth metal sulfide acts as the host material and divalent europium ions act as the dopant. Accordingly, the photonic marker may be CaS doped with Eu²⁺ or may be Ba_{y}Sr_{1-y}S where 0 ≤ y ≤ 1 doped with Eu²⁺. For example, in the latter case, the photonic marker is SrS doped with Eu²⁺ when y = 0, Ba_{0.5}Sr_{0.5}S doped with Eu²⁺ when y = 0.5, and BaS doped with Eu²⁺ when y = 1. Preferably, 0 ≤ y ≤ 0.5.

According to the present invention, the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively. In case the photonic marker is CaS doped with Eu²⁺, it is expressed as Ca₁₋ₓS:Eu²⁺ₓ where 0.0005 ≤ x ≤ 0.03, and in case the photonic marker is Ba_{y}Sr_{1-y}S where 0 ≤ y ≤ 1 doped with Eu²⁺, it is expressed as (Ba_{y}Sr_{1-y})₁₋ₓS:Eu²⁺ₓ where 0.0005 ≤ x ≤ 0.03. Accordingly, the above expressions with the coefficient x reflect the concentration of the dopant Eu²⁺, also sometimes referred to herein as the dopant concentration, in the respective alkaline earth metal sulfide phosphor. Preferably, 0.0005 ≤ x ≤ 0.015.

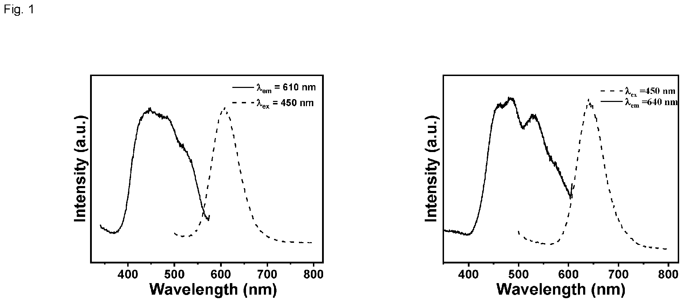

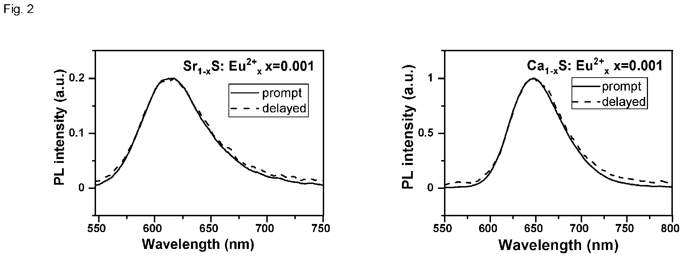

Figure 1 shows the photoluminescence excitation spectrum and the emission spectrum of both Sr_{0.998}S:Eu²⁺_{0.002} (left side) and Ca_{0.999}S:Eu²⁺_{0.001} (right side). In each case, the absorption band is ideally situated for excitation at a wavelength of about 450 nm using an LED, e.g., a smartphone flash. Taking account of the emission wavelengths, and since the emission is delayed as discussed further hereinbelow, detection of the photoluminescence intensity can be suitably accomplished using a smartphone camera. Figure 2 shows the emission spectrum of both Sr_{0.999}S:Eu²⁺_{0.001} (left side) and Ca_{0.999}S:Eu²⁺_{0.001} (right side) for prompt and delayed emission. As confirmed by Figure 2, the emission spectrum is essentially the same for prompt and delayed emission in each case.

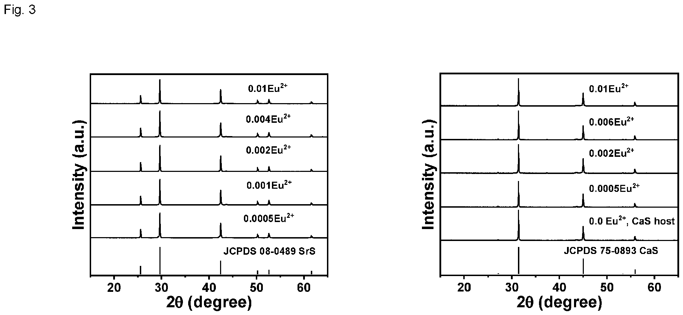

Figure 3 shows representative X-ray diffraction patterns of both SrS doped with Eu²⁺ (left side) and CaS doped with Eu²⁺ (right side) for different dopant concentrations. The references shown in Figure 3 are the standards JCPDS 08-0489 of SrS and JCPDS 75-0893 of CaS. As confirmed by Figure 3, the doped host materials differ in their X-ray diffraction patterns from the undoped ones.

As mentioned above, the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively. By adjusting the concentration of the dopant Eu²⁺ in the respective alkaline earth metal sulfide phosphor, it is possible to tune the photoluminescence lifetime of the photonic marker so that it falls within the range of from 0.001 to 10 s, preferably within the range of from 0.01 to 1 s, at room temperature, which means that the emission is delayed. Accordingly, the photonic marker exhibits a photoluminescence lifetime which can be determined by analyzing a sequence of video frames taken by a low frame rate camera, i.e., a standard video camera, such as the camera of a smartphone or the camera of a tablet computer, operating in the range of from 20 to 2000 fps, e.g., in the range of from 20 to 1000 fps, in the range of from 20 to 500 fps, in the range of from 20 to 250 fps, or more specifically in the range of from 30 to 120 fps. In order to keep the evaluation of the photoluminescence rapid, the photoluminescence lifetime of the photonic marker should not exceed ten seconds at room temperature. Generally, the maximum photoluminescence lifetime which is still applicable is only limited by how long a video can be recorded in order to determine the photoluminescence lifetime.

As surprisingly found by the present inventors, the photolum inescence lifetime accompanying the delayed emission results from doping the host material with Eu²⁺ at rather small concentrations, as reflected by the expressions Ca₁₋ₓS:Eu²⁺ₓ or (Ba_{y}Sr_{1-y})₁₋ₓS:Eu²⁺ₓ where 0.0005 ≤ x ≤ 0.03, respectively.

It is assumed that an optimal concentration of the dopant Eu²⁺, i.e., a dopant concentration which satisfies the above expressions, optimizes excited state energy transfer into the charge transfer band and modifies the charge transfer state lifetime.

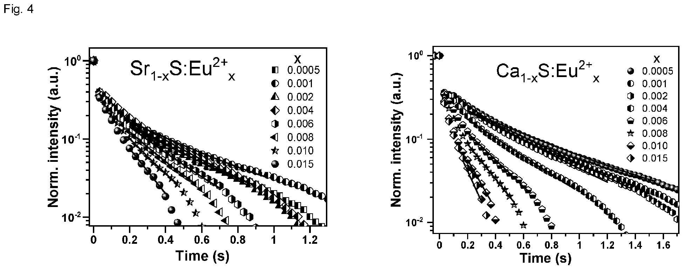

Figure 4 shows the photoluminescence intensity of both SrS doped with Eu²⁺ (left side) and CaS doped with Eu²⁺ (right side) as a function of the time on a logarithmic scale for different dopant concentrations. As can be seen in Figure 4, the decay of the photoluminescence intensity varies with the concentration of the dopant Eu²⁺ in each case.

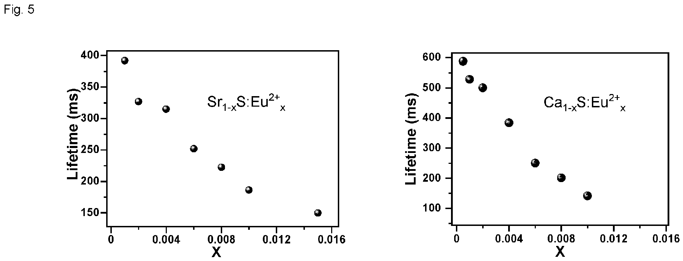

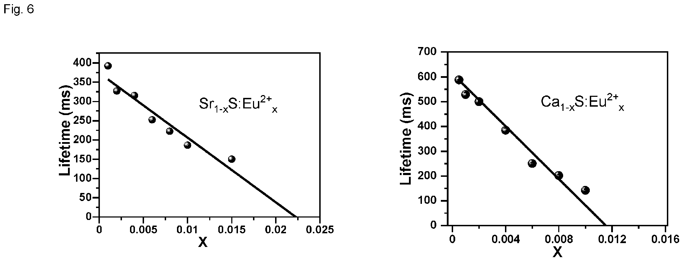

Figure 5 shows the photoluminescence lifetime of both SrS doped with Eu²⁺ (left side) and CaS doped with Eu²⁺ (right side) as a function of the dopant concentration. As can be seen in Figure 5, the photoluminescence lifetime can be tuned by varying the concentration of the dopant Eu²⁺ in each case. In particular, by varying the dopant concentration, the photoluminescence lifetime of the photonic marker can be tuned over several orders of magnitude. As such, the photoluminescence lifetime may be regarded as a delayed photoluminescence lifetime. Figure 6 shows a linear regression of the photoluminescence lifetime for both SrS doped with Eu²⁺ (left side) and CaS doped with Eu²⁺ (right side) as shown in Figure 5. As can be seen in Figure 6, by increasing the dopant concentration, the photoluminescence lifetime almost linearly decreases in each case.

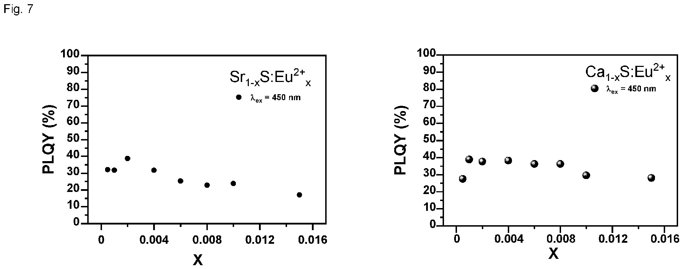

Figure 7 shows the photoluminescence quantum yield of both SrS doped with Eu²⁺ (left side) and CaS doped with Eu²⁺ (right side) as a function of the dopant concentration. As can be seen in Figure 7, the photoluminescence quantum yield remains almost unchanged in each case when tuning the photoluminescence lifetime by varying the concentration of the dopant Eu²⁺, and is sufficient to be detected with a standard video camera.

Methods for preparing alkaline earth metal sulfide phosphors are well known in the art, and are described, for instance, in Journal of Luminescence 2005, 111, 139-145 (DOI: 10.1016/j.jlumin.2004.07.005), Chinese Physics B 2014, 23, 087808 (DOI: 10.1088/1674-1056/23/8/087808), Materials Research Bulletin 2014, 51, 202-204 (DOI: 10.1016/j.materresbull.2013.12.016), Optical Materials 2014, 36, 1822-1825 (DOI: 10.1016/j.optmat.2014.04.029), and Applied Physics A 2019, 125, 141 (DOI: 10.1007/s00339-019-2447-6). As described in these references, doped alkaline earth metal sulfides can be prepared via solid-state carbothermic reduction reaction without flux assistance. The procedure involves mole ratio mixing of an alkaline earth sulfate with the dopant and an excess of activated carbon. The resulting products are annealed at high temperatures in a tube furnace at 5% H₂ and 95% Ar, let to cool to room temperature and then cleaned. This well-established procedure can be suitably used to prepare the photonic marker described herein, using Eu²⁺ as the dopant.

The above considerations are also applicable in case strontium is partially or completely substituted by barium in the host material.

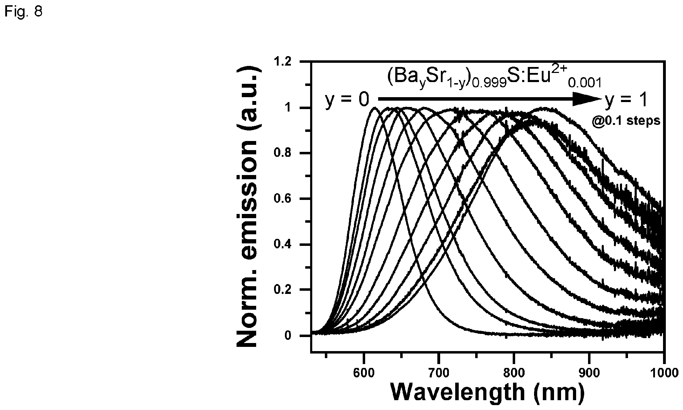

Figure 8 shows the emission spectrum of (Ba_{y}Sr_{1-y})_{0.999}S:Eu²⁺_{0.001} for different concentrations of barium in the host material, also sometimes referred to herein as the barium concentration. The emission spectrum shown in Figure 8 is taken with an excitation wavelength of 450 nm. As can be seen in Figure 8, increasing the barium concentration (y = 0 → y = 1) shifts the peak position from the visible to the near infrared (NIR) wavelength range. Thereby, the color of the photonic marker can be tuned in addition to the photoluminescence lifetime thereof as discussed further hereinbelow.

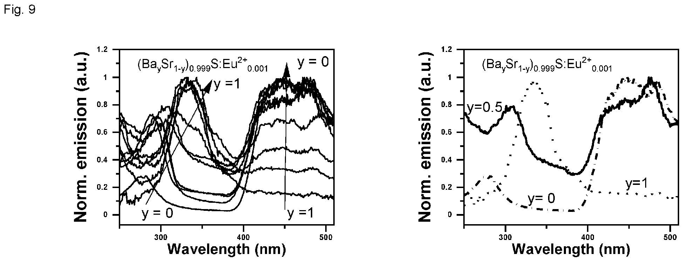

Figure 9 shows the photoluminescence excitation spectrum of (Ba_{y}Sr_{1-y})_{0.999}S:Eu²⁺_{0.001} for different concentrations of barium in the host material (left side), in particular for y = 0, y = 0.5, and y = 1 (right side). In the photoluminescence excitation spectrum, two broad peaks can be observed, one in the region at around 300 to 350 nm, which is the bandgap region, and the other one in the region at around 400 to 500 nm. As can be seen in Figure 9, increasing the barium concentration (y = 0 → y = 1) reduces the absorption band at around 400 to 500 nm while, at the same time, increasing the absorption band at around 300 to 350 nm. However, even in case of high barium concentrations, the photonic marker can still be sufficiently excited at a wavelength of 450 nm so that detection with a standard video camera is possible.

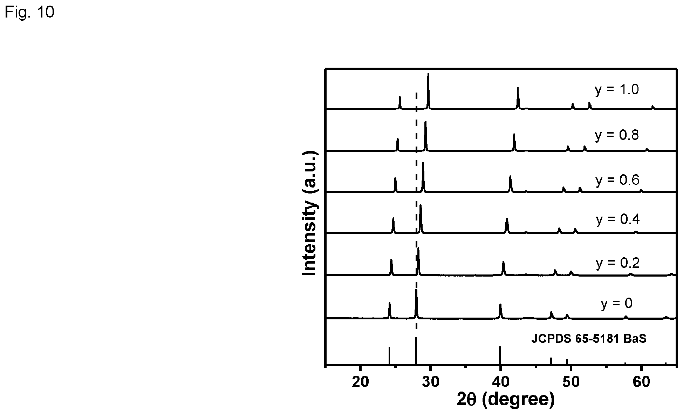

Figure 10 shows representative X-ray diffraction patterns of (Ba_{y}Sr_{1-y})_{0.999}S:Eu²⁺_{0.001} for different concentrations of barium in the host material. The reference shown in Fig-ure 10 is the standard JCPDS 65-5181 BaS. As confirmed by Figure 10, the doped host material differs in its X-ray diffraction pattern from the undoped one.

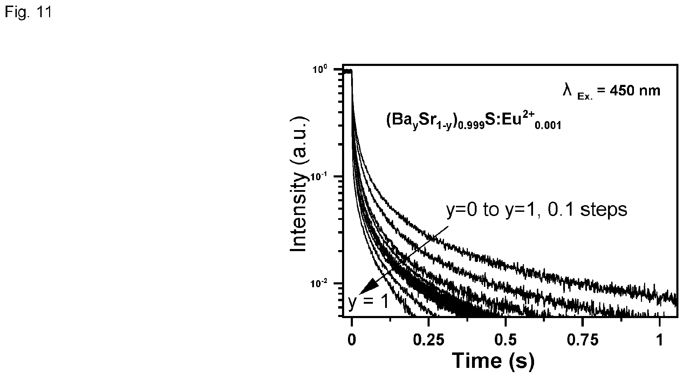

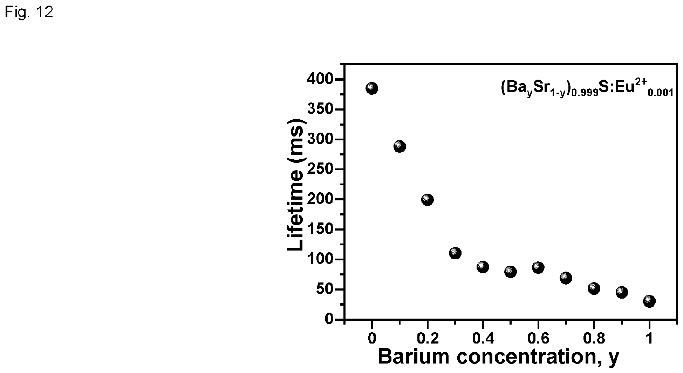

Figure 11 shows the photoluminescence intensity of (Ba_{y}Sr_{1-y})_{0.999}S:Eu²⁺_{0.001} as a function of the time on a logarithmic scale for different concentrations of barium in the host material. As can be seen in Figure 11, the decay of the photoluminescence intensity varies with the concentration of barium in the host material. Figure 12 shows the photoluminescence lifetime of (Ba_{y}Sr_{1-y})_{0.999}S:Eu²⁺_{0.001} as a function of the concentration of barium in the host material. As can be seen in Figure 12, the photoluminescence lifetime can be tuned by varying the barium concentration. Accordingly, when using Ba_{y}Sr_{1-y}S where 0 ≤ y ≤ 1 as the host material, the photoluminescence lifetime of the photonic marker is not only tunable by varying the concentration of the dopant Eu²⁺, but also tunable by varying the concentration of barium in the host material.

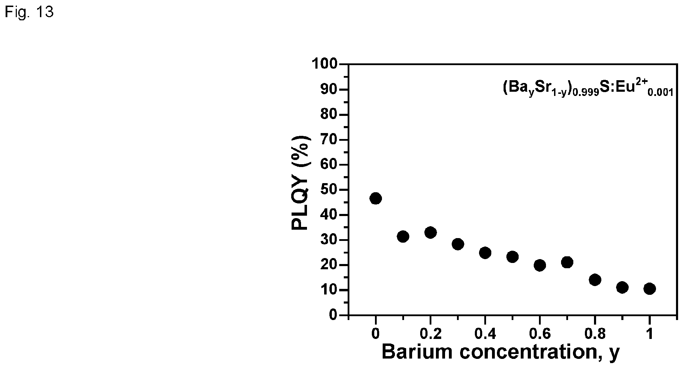

Figure 13 shows the photoluminescence quantum yield of (Ba_{y}Sr_{1-y})_{0.999}S:Eu²⁺_{0.001} as a function of the concentration of barium in the host material. As can be seen in Figure 13, the photoluminescence quantum yield decreases with the barium concentration. However, even for BaS as the host material, the photoluminescence quantum yield is still sufficient to be detected with a video camera. The shifting of the emission spectrum to the NIR wavelength range may require the video camera to operate without an NIR filter.

The host material of the photonic marker, which is doped with Eu²⁺, may be codoped with at least one codopant selected from the group consisting of Ln³⁺, Mn²⁺, Mn⁴⁺, Cr³⁺, Bi³⁺, Pb²⁺, Cu⁺, Hf⁴⁺, Zr⁴⁺, Ti⁴⁺, and Ti³⁺. The concentration of the at least one codopant may be in the range of from 0.01 to 10 mol% with respect to the alkaline earth metal(s) constituting the host material, which means that 0.01 to 10 mol% of the alkaline earth metal(s) constituting the host material may be substituted with the at least one codopant.

By varying the at least one codopant as well as the concentration thereof, also sometimes referred to herein as the codopant concentration, it is possible to further tune the photoluminescence lifetime of the photonic marker.

In this context, Table 1 shows the relative change in the photoluminescence lifetime which is defined as the ratio "new lifetime / base lifetime", wherein the new lifetime is the lifetime with the codopant, and wherein the base lifetime is the lifetime without the codopant. The excitation wavelength is 450 nm.

**Table 1**

| material | dopant | codopant | new lifetime / base lifetime |
|---|---|---|---|
| Sr₁₋ₓS:Eu²⁺ₓ, Dy³⁺ | x = 0.002 | 0.1 mol% | 0.70 |
| | x = 0.002 | 0.2 mol% | 1.08 |
| | x = 0.002 | 0.4 mol% | 1.20 |
| | x = 0.002 | 0.6 mol% | 1.55 |
| | x = 0.002 | 0.8 mol% | 0.50 |
| Sr₁₋ₓS:Eu²⁺ₓ, Tm³⁺ | x = 0.002 | 0.4 mol% | 1.96 |
| | x = 0.002 | 2.0 mol% | 1.11 |
| Sr₁₋ₓS:Eu²⁺ₓ, Gd³⁺ | x = 0.002 | 0.4 mol% | 0.53 |
| Sr₁₋ₓS:Eu²⁺ₓ, Er³⁺ | x = 0.002 | 0.4 mol% | 1.05 |
| | x = 0.002 | 2.0 mol% | 1.32 |
| Sr₁₋ₓS:Eu²⁺ₓ, La³⁺ | x = 0.002 | 0.4 mol% | 0.83 |
| Sr₁₋ₓS:Eu²⁺ₓ, Y³⁺ | x = 0.002 | 0.4 mol% | 0.55 |
| Sr₁₋ₓS:Eu²⁺ₓ, Yb³⁺ | x = 0.002 | 0.4 mol% | 0.89 |
| Sr₁₋ₓS:Eu²⁺ₓ, Ho³⁺ | x = 0.002 | 0.4 mol% | 0.76 |
| | x = 0.002 | 2.0 mol% | 0.83 |
| Sr₁₋ₓS:Eu²⁺ₓ, Tb³⁺ | x = 0.002 | 0.4 mol% | 1.31 |
| | x = 0.002 | 2.0 mol% | 0.68 |
| Sr₁₋ₓS:Eu²⁺ₓ, Nd³⁺ | x = 0.002 | 2.0 mol% | 0.88 |

For instance, as can be taken from Table 1, an increase of the base lifetime by a factor of two can be achieved by codoping with 0.4 mol% Tm³⁺ (new lifetime / base lifetime = 1.96), and a decrease of the base lifetime by a factor of two can be achieved by codoping with 0.8 mol% Dy³⁺ (new lifetime / base lifetime = 0.50) or by codoping with 0.4 mol% Gd³⁺ (new lifetime / base lifetime = 0.53).

For designing an alkaline earth metal sulfide phosphor with given characteristics in terms of photoluminescence lifetime and emission spectrum, the following steps 1 to 3 may be performed:

### Step 1:

The host is selected to achieve the desired emission spectrum.

### Step 2:

The dopant concentration is selected for the host selected in step 1 according to the following formula: L = A - B x, where L represents the desired photoluminescence lifetime, A and B each represent constant coefficients experimentally derived for the selected host, and x represents the coefficient in the expressions Ca₁₋ₓS:Eu²⁺ₓ or (Ba_{y}Sr_{1-y})₁₋ₓS:Eu²⁺ₓ where 0.0005 ≤ x ≤ 0.03, respectively. For example, the coefficients A and B determined for the hosts SrS and CaS are extracted from the linear regression of the photoluminescence lifetime shown in Figure 6, and are given in Table 2 below:

**Table 2**

| | A | B |
|---|---|---|
| SrS | 370 | 1.7×10⁴ |
| CaS | 585 | 4.7×10⁴ |

### Step 3:

At least one codopant may be selected to further tune the photoluminescence lifetime achieved in step 2, e.g., as shown in Table 1 above.

The system for evaluating the photoluminescence of a photonic marker according to an aspect of the present invention comprises at least one photonic marker as defined above, an excitation unit configured to excite the at least one photonic marker so that the at least one photonic marker emits photoluminescence, the intensity of which decays over time, wherein the excitation unit is a pulsed light source having an excitation wavelength in the range of from 300 to 700 nm, and a detection unit configured to detect the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps, and wherein at least one of the light source and the video camera is part of a portable electronic device.

For the system according to an aspect of the present invention, the definitions provided above for the photonic marker described herein equally apply.

As the excitation unit, a pulsed light source having an excitation wavelength in the range of from 300 to 700 nm is used for exciting the photonic marker. As can be seen in Figure 1, both Sr_{0.998}S:Eu²⁺_{0.002} (left side) and Ca_{0.999}S:Eu²⁺_{0.001} (right side), for example, can be excited at 450 nm, i.e., in the visible wavelength range. Advantageously, a low cost pulsed light source, such as a modulated LED flash, may be used for doing so. The light source may be part of a portable electronic device, e.g., a smartphone or a tablet computer, with the proviso that at least one of the light source and the video camera is part of a portable electronic device. Alternatively, the light source may be provided independently from the portable electronic device.

As mentioned above, the system further comprises a detection unit configured to detect the photoluminescence intensity of the at least one photonic marker in a time-resolved manner. As the detection unit, a video camera having a frame rate of equal to or more than 20 fps and equal to or less than 2000 fps, preferably equal to or more than 20 fps and equal to or less than 1000 fps, is used. Generally, the frame rate should be such that the photoluminescence lifetime of the photonic marker is more than twice the inverse of the framerate at room temperature. In other words, in case of a photoluminescence lifetime of more than 100 ms at room temperature, for instance, a frame rate of 20 fps is sufficient. Since the photoluminescence lifetime of the photonic marker described herein is sufficiently long, e.g., on the order of tens to hundreds of milliseconds, a standard video camera is used, as mentioned above. Such a standard video camera may be equipped with a charge-coupled device (CCD) image sensor or with a complementary metal-oxide-semiconductor (CMOS) image sensor. Standard video cameras typically have frame rates of 2000 fps or less, 1000 fps or less, 500 fps or less, or 250 fps or less. The video camera may be part of a portable electronic device, such as a smartphone or a tablet computer, with the proviso that at least one of the light source and the video camera is part of a portable electronic device.

Accordingly, since the photonic marker described herein has a delayed photoluminescence lifetime, the system according to an aspect of the present invention allows for evaluating the photoluminescence of the photonic marker without the need of any specialized detectors which would cause high costs and would require complicated handling. Thus, the photonic marker described herein can be suitably used for one or more of security marking, product identification, and material sorting, as described in detail below.

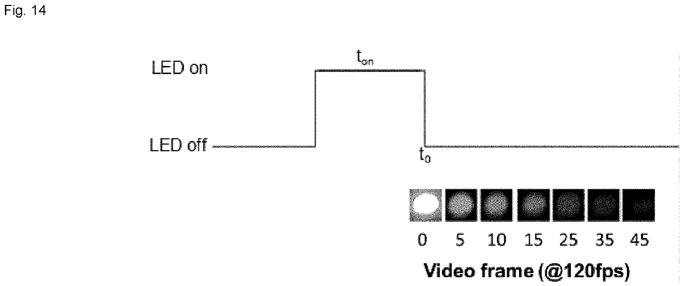

Figure 14 shows video frames of the time-resolved photoluminescence intensity of an exemplary photonic marker along with the excitation intensity as a function of the number of video frames. The video frames are taken by a standard video camera operated at 120 fps using a modulated LED flash for excitation. As can be seen in Figure 14, frame zero (t₀) is defined to be the last frame in which the excitation is still turned on (tₒₙ ≤ t₀). The photoluminescence intensity of the photonic marker is easily detectable in the subsequent frames. An analysis of the photoluminescence intensity in a given region as a function of the frame number, i.e., as a function of the time, allows the photoluminescence lifetime in said given region to be determined. However, for many applications, it can be sufficient to visually evaluate the photoluminescence of the photonic marker without quantitatively determining the photoluminescence lifetime thereof.

Herein, the system comprises at least one photonic marker, i.e., the system is not restricted to only one photonic marker, and it may comprise two, three, four or even more photonic markers, depending on the application. In such a case, the system is configured to evaluate the photoluminescence of each of said photonic markers, i.e., it is configured to excite each of said photonic markers so that each of said photonic markers emits photoluminescence, the intensity of which decays over time, and configured to detect the photoluminescence intensity of each of said photonic markers in a time-resolved manner.

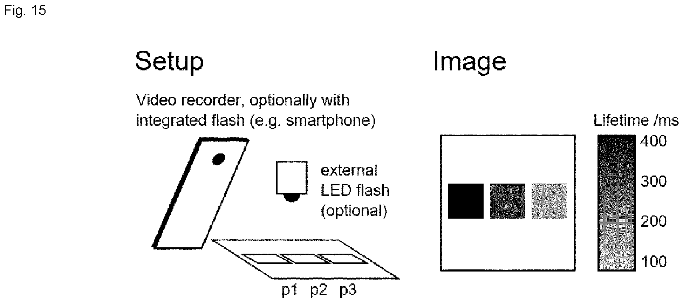

Figure 15 shows a schematic system with three exemplary photonic markers added to a sample. A modulated LED flash is used as the excitation unit. As the detection unit, a video camera of a smartphone is used. As can be seen in Figure 15, different photonic markers which exhibit different photoluminescence lifetimes may be suitably added to different regions of a sample. Thus, it is possible to individually evaluate the photoluminescence of said photonic markers and, as required, to determine the photoluminescence lifetimes thereof by independently analyzing the different regions of the sample.

As mentioned above, a qualitative analysis of the time-resolved photoluminescence intensity may be sufficient in many cases, i.e., the quantitative determination of the photoluminescence lifetime is not necessary, in particular when the system comprises two or more photonic markers with different photoluminescence lifetimes.

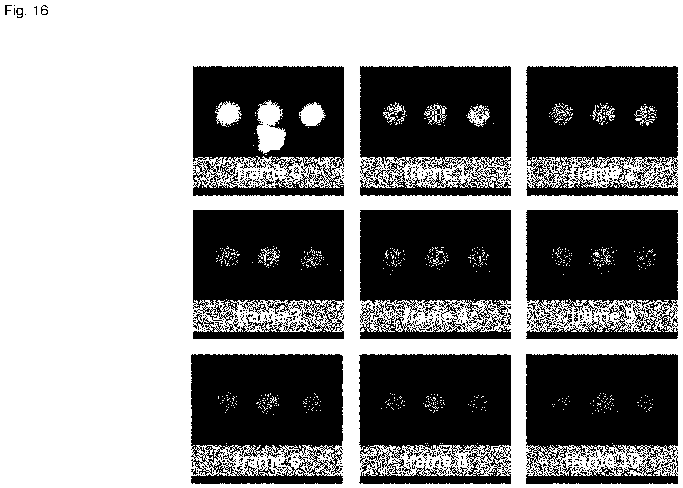

Figure 16 shows video frames of the time-resolved photoluminescence intensity of three exemplary photonic markers having different photoluminescence lifetimes along with a reference photonic marker. After the excitation light has been turned off (frame zero) and as the time progresses, it can be appreciated that the faster decaying photonic markers stop emitting, leaving only the photoluminescence of the longer emitting photonic markers visible. Often, it is sufficient to visually inspect the time evolution of the video frames in a qualitative manner. As required, more elaborate methods to compare the changes between successive frames may be employed, and a comparison with the expected photoluminescence decay behavior may be made. As can be seen in Figure 16, a reference photonic marker is included as well. The photoluminescence intensity thereof is not visible for multiple frames, and its photoluminescence lifetime cannot be determined using a standard video camera due to its low frame rate.

The photonic marker described herein can be suitably used for determining the authenticity of a sample to which it is added.

For this purpose, the system further comprises a determination unit configured to determine the authenticity of a sample to which the at least one photonic marker is added by comparing the time-resolved photoluminescence intensity of the at least one photonic marker with a predetermined photoluminescence profile of the at least one photonic marker at a given temperature. Accordingly, by comparing the time-resolved photoluminescence intensity or, as required, the photoluminescence lifetime obtainable therefrom, with the predetermined photoluminescence profile at a given temperature, it is possible to affirm or deny the presence of the photonic marker. In other words, it is possible to determine the authenticity of the sample to which the photonic marker is added.

In addition to the photoluminescence lifetime, also the emission peak and wavelength may be used for authentification. For example, the time-resolved photoluminescence intensity in groupings of pixels from the detection unit, i.e., a standard video camera, can be used to obtain a two-dimensional dataset representing the photoluminescence decay profiles over the field of view of the video camera. Furthermore, the color channels on the video image can be separately used to create two-dimensional datasets that distinguish the photoluminescence decay of photonic markers with different emission spectra. The photoluminescence lifetime at all different parts of the label can be captured with the video camera. Then, the photoluminescence lifetimes at all points in the label can be used for authentification. It is also possible to make a label with two photonic markers in the same place, each having a different photoluminescence lifetime and color. In this case, the different colors can help the different photoluminescence lifetimes to be distinguished.

As mentioned above, at least one of the light source and the video camera is part of a portable electronic device. The portable electronic device may be a smartphone or a tablet computer. For example, both the light source acting as the excitation unit and the video camera acting as the detection unit may be part of such a portable electronic device. Likewise, the determination unit, if present, may be part of such a portable electronic device.

For example, by using a smartphone or a tablet computer which is typically equipped with a modulated LED flash and a standard video camera, it is possible to both excite the at least one photonic marker and to detect the photoluminescence intensity thereof in a time-resolved manner. Further, the smartphone or the tablet computer allows to determine the authenticity of a sample by means of a computer program running on the smartphone or tablet computer. In order to do so, it is not required to quantitatively determine the photoluminescence lifetime of the at least one photonic marker. A qualitative comparison with the predetermined photoluminescence profile may be sufficient.

Advantageously, using the photonic marker described herein does not require any high-speed cameras for detecting the photoluminescence intensity thereof in a time-resolved manner, in contrast to the commercially available photonic markers which exhibit rather short photoluminescence lifetimes. Typically, the photoluminescence lifetimes of commercially available photonic markers are on the order of a few tens to hundreds of microseconds only. A standard video camera typically operates at 30 fps or 120 fps, which corresponds to a time delay of about 33 ms or about 8.3 ms between two subsequent frames. Hence, there is no emission left to be measured in the frame after the excitation is turned off. Consequently, a standard video camera with its frame rate of 30 fps or 120 fps cannot be used for evaluating the photoluminescence of commercially available photonic markers.

Even though some organic materials also exhibit a delayed emission which could be detected using low frame rate cameras, the use of such organic materials as photonic markers for one or more of security marking, product identification, and material sorting is inferior, since the long-term stability of these photonic markers is poor. Besides, the photoluminescence lifetime of these organic materials is sensitive to oxygen, which makes lifetime-based imaging even more difficult.

The method for evaluating the photoluminescence of a photonic marker according to an aspect of the present invention comprises the steps of providing at least one photonic marker as defined above, exciting, by an excitation unit, the at least one photonic marker so that the at least one photonic marker emits photoluminescence, the intensity of which decays over time, wherein the excitation unit is a pulsed light source having an excitation wavelength in the range of from 300 to 700 nm, and detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps, and wherein at least one of the light source and the video camera is part of a portable electronic device.

For the method according to an aspect of the present invention, the definitions provided above for the photonic marker described herein and for the system according to an aspect of the present invention equally apply.

Evaluating the photoluminescence of the photonic marker allows for one or more of security marking, product identification, and material sorting. For this purpose, the method further comprises the step of determining the authenticity of a sample to which the at least one photonic marker is added by comparing the time-resolved photoluminescence intensity of the at least one photonic marker with a predetermined photoluminescence profile of the at least one photonic marker at a given temperature.

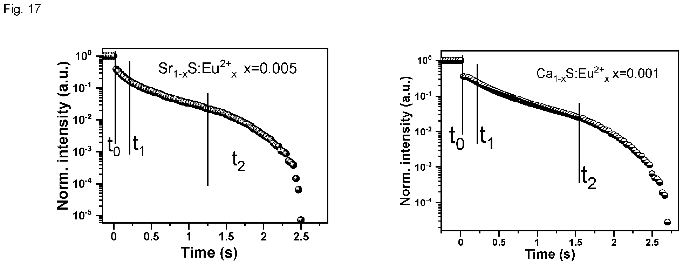

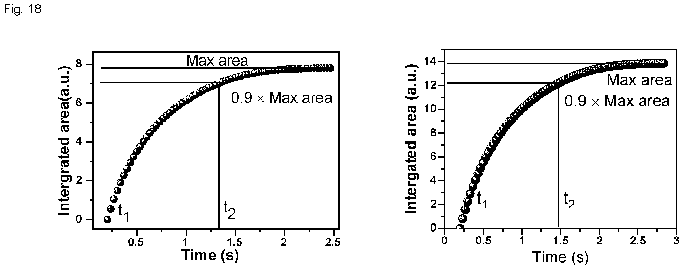

Without being limited, in case the photoluminescence lifetime of the photonic marker shall be determined, the following procedure may be carried out:
First of all, a video of the sample to which the photonic marker is added is recorded during and after a flash excitation. In this instance, the length of the flash is selected so that the photonic marker reaches steady state. Then, the video is analyzed, frame by frame, and the photoluminescence intensity for each pixel or group of pixels is determined from the series of recorded frames. The timescale of the time-resolved photoluminescence intensity data is determined by the timestamps of the frames or the frame rate. The initial photoluminescence intensity during the flash is normalized to a value of 1. Herein, the time at which the pulsed light source such as an LED, e.g., a smartphone flash, turns off is found by running an edge-finding algorithm on the data. This time is taken to be t₀. Then, the decay of the photoluminescence intensity as a function of time is fit between t₁ and t₂. To determine t₁, a fixed offset from t₀ is selected, such as 50 to 300 ms. To determine t₂, the integral of the intensity as a function of the time is recorded from t₁. The time at which the integrated photoluminescence intensity becomes greater than a given percentage, such as 90% of the maximum photoluminescence intensity, is taken as t₂, being characteristic for a specific photonic marker as well as for a specific temperature. The photoluminescence decay between t₁ and t₂ may then be fit by a single exponential function f(t) = f₀ + A exp(-t/τ) using standard algorithms (exponential decay of intensity). The photoluminescence lifetime for each pixel or group of pixels can then be displayed as a false color image or by any other visualization method, as required. The above procedure is summarized in Figures 17 and 18.

Figure 17 shows the photoluminescence intensity of both SrS doped with Eu²⁺ (left side) and CaS doped with Eu²⁺ (right side) as a function of the time on a logarithmic scale along with labels t₀, t₁, and t₂ for determining the photoluminescence lifetime. As can be seen in Figure 17, in the region between t₁ and t₂, the decay is almost linear on a logarithmic scale, indicating that a single exponential fit is adequate. Specifically, determination of t₀ is by edge detection. Addition of a fixed offset to t₀ gives t₁. Integration of the intensity from t₁ allows t₂ to be found as the time at which the integrated photoluminescence intensity reaches a given percentage, e.g., 90%, of the maximum integrated photoluminescence intensity. A₀ is the amplitude of the exponential fit of the delayed emission at t₀. The higher A₀ the better. The minimum signal detectable is limited by the detection unit, and is around 1% of the maximum signal, as can be seen from the non-linearity in the logarithmic plot. Figure 18 shows the selection of t₂ as the time at which 90% of the total area is reached for both SrS doped with Eu²⁺ (left side) and CaS doped with Eu²⁺ (right side) as shown in Figure 17. The above procedure may be suitably carried out with the computer-program product described below.

The computer-program product for evaluating the photoluminescence of a photonic marker according to an aspect of the present invention comprises computer-readable instructions, which when loaded and run by a processor of an electronic device, cause the electronic device to perform a method comprising the steps of generating and outputting an excitation signal to an excitation unit for exciting at least one photonic marker as defined above so that the at least one photonic marker emits photoluminescence, the intensity of which decays over time, wherein the excitation unit is a pulsed light source having an excitation wavelength in the range of from 300 to 700 nm, and detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps, and wherein at least one of the light source and the video camera is part of a portable electronic device.

For the computer-program product according to an aspect of the present invention, the definitions provided above for the photonic marker described herein, for the system according to an aspect of the present invention and for the method according to an aspect of the present invention equally apply.

Herein, the electronic device is a portable electronic device, such as a mobile phone, e.g., a smartphone, or a tablet computer.

The computer-program product can be used for one or more of security marking, product identification, and material sorting. For this purpose, the computer-program product and the method to which it relates further comprise the step of determining, by a determination unit, the authenticity of a sample to which the at least one photonic marker is added by comparing the time-resolved photoluminescence intensity of the at least one photonic marker with a predetermined photoluminescence profile of the at least one photonic marker at a given temperature.

Further, the photonic marker described herein is ideally suited for one or more of security marking, product identification, and material sorting. For example, the photonic marker can serve as an easily field-readable photonic security code on consumer goods, thereby preventing counterfeiting. For identifying products and sorting materials, the random position of the spots formed by the photonic marker may be evaluated. Preferably, the spot size is from 0.1 to 100 µm, more preferably from 0.5 to 50 µm.

Up to now, using commercially available photonic markers for the above applications, if at all possible, requires sophisticated equipment such as a raster scanning microscope coupled to a time-correlated single photon counting detection unit.

On the other hand, the photonic marker described herein allows for one or more of security marking, product identification, and material sorting using low cost and easy-to-handle equipment, such as a modulated LED flash in combination with a low frame rate camera of a transportable electronic device, such as a smartphone or a tablet computer. The photonic marker described herein exhibits a delayed emission accompanied by a photoluminescence lifetime of tens to hundreds of milliseconds in combination with a high photoluminescence quantum yield. Advantageously, the photonic marker is stable in both air and water even at higher temperatures. Furthermore, the photonic marker can be efficiently produced without the need of any wet chemical process steps at low temperatures, leading to excellent reproducibility of the photoluminescence decay behavior thereof.

## Claims

1. A system for evaluating the photoluminescence of a photonic marker, the system comprising:
at least one photonic marker comprising a host material selected from the group consisting of CaS and Ba_{y}Sr_{1-y}S where 0 ≤ y ≤ 1, wherein the host material is doped with Eu²⁺;
an excitation unit configured to excite the at least one photonic marker so that the at least one photonic marker emits photoluminescence, the intensity of which decays over time, wherein the excitation unit is a pulsed light source having an excitation wavelength in the range of from 300 to 700 nm; and
a detection unit configured to detect the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

2. The system according to claim 1, wherein the host material doped with Eu²⁺ is codoped with at least one codopant selected from the group consisting of Ln³⁺, Mn²⁺, Mn⁴⁺, Cr³⁺, Bi³⁺, Pb²⁺, Cu⁺, Hf⁴⁺, Zr⁴⁺, Ti⁴⁺, and Ti³⁺.

3. The system according to claim 2, wherein the concentration of the at least one codopant is in the range of from 0.01 to 10 mol% with respect to the alkaline earth metal(s) constituting the host material.

4. The system according to any one of claims 1 to 3, wherein the system further comprises:
a determination unit configured to determine the authenticity of a sample to which the at least one photonic marker is added by comparing the time-resolved photoluminescence intensity of the at least one photonic marker with a predetermined photoluminescence profile of the at least one photonic marker at a given temperature.

5. The system according to any one of claims 1 to 4, wherein the portable electronic device is selected from the group consisting of a smartphone and a tablet computer.

6. A method for evaluating the photoluminescence of a photonic marker, the method comprising the steps of:
providing at least one photonic marker comprising a host material selected from the group consisting of CaS and Ba_{y}Sr_{1-y}S where 0 ≤ y ≤ 1, wherein the host material is doped with Eu²⁺;
exciting, by an excitation unit, the at least one photonic marker so that the at least one photonic marker emits photoluminescence, the intensity of which decays over time, wherein the excitation unit is a pulsed light source having an excitation wavelength in the range of from 300 to 700 nm; and
detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

7. The method according to claim 6, wherein the method further comprises the step of:
determining the authenticity of a sample to which the at least one photonic marker is added by comparing the time-resolved photoluminescence intensity of the at least one photonic marker with a predetermined photoluminescence profile of the at least one photonic marker at a given temperature.

8. The method according to claim 6 or 7, wherein the portable electronic device is selected from the group consisting of a smartphone and a tablet computer.

9. A computer-program product for evaluating the photoluminescence of a photonic marker, wherein the computer-program product comprises computer-readable instructions, which when loaded and run by a processor of an electronic device, cause the electronic device to perform a method comprising the steps of:
generating and outputting an excitation signal to an excitation unit for exciting at least one photonic marker comprising a host material selected from the group consisting of CaS and Ba_{y}Sr_{1-y}S where 0 ≤ y ≤ 1, wherein the host material is doped with Eu²⁺, so that the at least one photonic marker emits photoluminescence, the intensity of which decays over time, wherein the excitation unit is a pulsed light source having an excitation wavelength in the range of from 300 to 700 nm; and
detecting, by a detection unit, the photoluminescence intensity of the at least one photonic marker in a time-resolved manner, wherein the detection unit is a video camera having a frame rate of equal to or more than 20 fps and equal to or less than 2000 fps, preferably equal to or more than 20 fps and equal to or less than 1000 fps,
wherein the host material doped with Eu²⁺ is expressed as Ca₁₋ₓS:Eu²⁺ₓ or (Ba_{y}Sr_{1-y})₁₋ₓS:Eu²⁺ₓ where 0.0005 ≤ x ≤ 0.03, respectively, such that there is a photoluminescence lifetime of the photonic marker in the range of from 0.001 to 10 s, preferably in the range of from 0.01 to 1 s, at room temperature, and
wherein at least one of the light source and the video camera is part of a portable electronic device.

10. The computer-program product according to claim 9, wherein the method further comprises the step of:
determining, by a determination unit, the authenticity of a sample to which the at least one photonic marker is added by comparing the time-resolved photoluminescence intensity of the at least one photonic marker with a predetermined photoluminescence profile of the at least one photonic marker at a given temperature.

11. The computer-program product according to claim 9 or 10, wherein the portable electronic device is selected from the group consisting of a smartphone and a tablet computer.

## Patentansprüche

1. System zum Bewerten der Photolumineszenz eines photonischen Markers, wobei das System umfasst:
zumindest einen photonischen Marker, der ein Wirtsmaterial umfasst, das aus der Gruppe bestehend aus CaS und Ba_{y}Sr_{1-y}S ausgewählt ist, wobei 0 ≤ y ≤ 1, wobei das Wirtsmaterial mit Eu²⁺ dotiert ist;
eine Anregungseinheit, die konfiguriert ist, den zumindest einen photonischen Marker anzuregen, sodass der zumindest eine photonische Marker Photolumineszenz emittiert, deren Intensität mit der Zeit abnimmt, wobei die Anregungseinheit eine gepulste Lichtquelle mit einer Anregungswellenlänge in dem Bereich von 300 bis 700 nm ist; und
eine Detektionseinheit, die konfiguriert ist, die Photolumineszenzintensität des zumindest einen photonischen Markers auf zeitaufgelöste Weise zu detektieren, wobei die Detektionseinheit eine Videokamera mit einer Bildrate von gleich oder größer als 20 fps und gleich oder kleiner als 2000 fps, vorzugsweise von gleich oder größer als 20 fps und gleich oder kleiner als 1000 fps, ist,
wobei das mit Eu²⁺ dotierte Wirtsmaterial als Ca₁₋ₓS:Eu²⁺ₓ oder (Ba_{y}Sr_{1-y})₁₋ₓS:Eu²⁺ₓ ausgedrückt ist, wobei jeweils 0,0005 ≤ x ≤ 0,03, sodass eine Photolumineszenzlebensdauer des photonischen Markers in dem Bereich von 0,001 bis 10 s, vorzugsweise in dem Bereich von 0,01 bis 1 s, bei Raumtemperatur vorliegt, und
wobei zumindest eines der Lichtquelle und der Videokamera ein Teil einer tragbaren elektronischen Vorrichtung ist.

2. System nach Anspruch 1, wobei das mit Eu²⁺ dotierte Wirtsmaterial mit zumindest einem Codotierstoff cokodotiert ist, der aus der Gruppe bestehend aus Ln³⁺, Mn²⁺, Mn⁴⁺, Cr³⁺, Bi³⁺, Pb²⁺, Cu⁺, Hf⁴⁺, Zr⁴⁺, Ti⁴⁺, und Ti³⁺ ausgewählt ist.

3. System nach Anspruch 2, wobei die Konzentration des zumindest einen Codotierstoffs in dem Bereich von 0,01 bis 10 Mol-% bezogen auf das bzw. die Erdalkalimetall(e), das bzw. die das Wirtsmaterial bildet bzw. bilden, ist.

4. System nach einem der Ansprüche 1 bis 3, wobei das System ferner umfasst:
eine Bestimmungseinheit, die konfiguriert ist, die Echtheit einer Probe, der der zumindest eine photonische Marker zugesetzt ist, durch Vergleichen der zeitaufgelösten Photolumineszenzintensität des zumindest einen photonischen Markers mit einem vorbestimmten Photolumineszenzprofil des zumindest einen photonischen Markers bei einer gegebenen Temperatur zu bestimmen.

5. System nach einem der Ansprüche 1 bis 4, wobei die tragbare elektronische Vorrichtung aus der Gruppe bestehend aus einem Smartphone und einem Tablet-Computer ausgewählt ist.

6. Verfahren zum Bewerten der Photolumineszenz eines photonischen Markers, wobei das Verfahren die Schritte umfasst:
Bereitstellen zumindest eines photonischen Markers, der ein Wirtsmaterial umfasst, das aus der Gruppe bestehend aus CaS und Ba_{y}Sr_{1-y}S ausgewählt ist, wobei 0 ≤ y ≤ 1, wobei das Wirtsmaterial mit Eu²⁺ dotiert ist;
Anregen, durch eine Anregungseinheit, des zumindest einen photonischen Markers, sodass der zumindest eine photonische Marker Photolumineszenz emittiert, deren Intensität mit der Zeit abnimmt, wobei die Anregungseinheit eine gepulste Lichtquelle mit einer Anregungswellenlänge in dem Bereich von 300 bis 700 nm ist; und
Detektieren, durch eine Detektionseinheit, der Photolumineszenzintensität des zumindest einen photonischen Markers auf zeitaufgelöste Weise, wobei die Detektionseinheit eine Videokamera mit einer Bildrate von gleich oder größer als 20 fps und gleich oder kleiner als 2000 fps, vorzugsweise von gleich oder größer als 20 fps und gleich oder kleiner als 1000 fps, ist,
wobei das mit Eu²⁺ dotierte Wirtsmaterial als Ca₁₋ₓS:Eu²⁺ₓ oder (Ba_{y}Sr_{1-y})₁₋ₓS:Eu²⁺ₓ ausgedrückt ist, wobei jeweils 0,0005 ≤ x ≤ 0,03, sodass eine Photolumineszenzlebensdauer des photonischen Markers in dem Bereich von 0,001 bis 10 s, vorzugsweise in dem Bereich von 0,01 bis 1 s, bei Raumtemperatur vorliegt, und
wobei zumindest eines der Lichtquelle und der Videokamera ein Teil einer tragbaren elektronischen Vorrichtung ist.

7. Verfahren nach Anspruch 6, wobei das Verfahren ferner den Schritt umfasst:
Bestimmen der Echtheit einer Probe, der der zumindest eine photonische Marker zugesetzt ist, durch Vergleichen der zeitaufgelösten Photolumineszenzintensität des zumindest einen photonischen Markers mit einem vorbestimmten Photolumineszenzprofil des zumindest einen photonischen Markers bei einer gegebenen Temperatur.

8. Verfahren nach Anspruch 6 oder 7, wobei die tragbare elektronische Vorrichtung aus der Gruppe bestehend aus einem Smartphone und einem Tablet-Computer ausgewählt wird.

9. Computerprogrammprodukt zum Bewerten der Photolumineszenz eines photonischen Markers, wobei das Computerprogrammprodukt computerlesbare Anweisungen umfasst, die, wenn sie durch einen Prozessor einer elektronischen Vorrichtung geladen und von diesem ausgeführt werden, die elektronische Vorrichtung veranlassen, ein Verfahren durchzuführen, das die Schritte umfasst:
Erzeugen und Ausgeben eines Anregungssignals an eine Anregungseinheit zum Anregen zumindest eines photonischen Markers, der ein Wirtsmaterial umfasst, das aus der Gruppe bestehend aus CaS und Ba_{y}Sr_{1-y}S ausgewählt ist, wobei 0 ≤ y ≤ 1, wobei das Wirtsmaterial mit Eu²⁺ dotiert ist, sodass der zumindest eine photonische Marker Photolumineszenz emittiert, deren Intensität mit der Zeit abnimmt, wobei die Anregungseinheit eine gepulste Lichtquelle mit einer Anregungswellenlänge in dem Bereich von 300 bis 700 nm ist; und
Detektieren, durch eine Detektionseinheit, der Photolumineszenzintensität des zumindest einen photonischen Markers auf zeitaufgelöste Weise, wobei die Detektionseinheit eine Videokamera mit einer Bildrate von gleich oder größer als 20 fps und gleich oder kleiner als 2000 fps, vorzugsweise von gleich oder größer als 20 fps und gleich oder kleiner als 1000 fps, ist,
wobei das mit Eu²⁺ dotierte Wirtsmaterial als Ca₁₋ₓS:Eu²⁺ₓ oder (Ba_{y}Sr_{1-y})₁₋ₓS:Eu²⁺ₓ ausgedrückt ist, wobei jeweils 0,0005 ≤ x ≤ 0,03, sodass eine Photolumineszenzlebensdauer des photonischen Markers in dem Bereich von 0,001 bis 10 s, vorzugsweise in dem Bereich von 0,01 bis 1 s, bei Raumtemperatur vorliegt, und
wobei zumindest eines der Lichtquelle und der Videokamera ein Teil einer tragbaren elektronischen Vorrichtung ist.

10. Computerprogrammprodukt nach Anspruch 9, wobei das Verfahren ferner den Schritt umfasst:
Bestimmen, durch eine Bestimmungseinheit, der Echtheit einer Probe, der der zumindest eine photonische Marker zugesetzt ist, durch Vergleichen der zeitaufgelösten Photolumineszenzintensität des zumindest einen photonischen Markers mit einem vorbestimmten Photolumineszenzprofil des zumindest einen photonischen Markers bei einer gegebenen Temperatur.

11. Computerprogrammprodukt nach Anspruch 9 oder 10, wobei die tragbare elektronische Vorrichtung aus der Gruppe bestehend aus einem Smartphone und einem Tablet-Computer ausgewählt ist.

## Revendications

1. Système permettant d'évaluer la photoluminescence d'un marqueur photonique, le système comprenant :
au moins un marqueur photonique comprenant un matériau hôte choisi dans le groupe constitué de CaS et Ba_{y}Sr_{1-y}S où 0 ≤ y ≤ 1, dans lequel le matériau hôte est dopé avec Eu²⁺ ;
une unité d'excitation configurée pour exciter l'au moins un marqueur photonique de sorte que l'au moins un marqueur photonique émet une photoluminescence, dont l'intensité décroît au fil du temps, dans lequel l'unité d'excitation est une source de lumière pulsée présentant une longueur d'onde d'excitation dans la plage de 300 à 700 nm ; et
une unité de détection configurée pour détecter l'intensité de photoluminescence de l'au moins un marqueur photonique de manière résolue dans le temps, dans lequel l'unité de détection est une caméra vidéo présentant une fréquence d'images supérieure ou égale à 20 fps et inférieure ou égale à 2000 fps, de préférence supérieure ou égale à 20 fps et inférieure ou égale à 1000 fps,
dans lequel le matériau hôte dopé avec Eu²⁺ est exprimé par Ca₁₋ₓS:Eu²⁺ₓ ou (Ba_{y}Sr_{1-y})₁₋ₓS:Eu²⁺ₓ où 0,0005 ≤ x ≤ 0,03, respectivement, de telle sorte qu'il y a une durée de vie de photoluminescence du marqueur photonique dans la plage allant de 0,001 à 10 s, de préférence dans la plage allant de 0,01 à 1 s, à température ambiante, et dans lequel au moins l'une parmi la source de lumière et la caméra vidéo fait partie d'un dispositif électronique portable.

2. Système selon la revendication 1, dans lequel le matériau hôte dopé avec Eu²⁺ est codopé avec au moins un codopant choisi dans le groupe constitué de Ln³⁺, Mn²⁺, Mn⁴⁺, Cr³⁺, Bi³⁺, Pb²⁺, Cu⁺, Hf⁴⁺, Zr⁴⁺, Ti⁴⁺ et Ti³⁺.

3. Système selon la revendication 2, dans lequel la concentration de l'au moins un codopant est dans la plage de 0,01 à 10 mol % par rapport à un métal ou à des métaux alcalino-terreux constituant le matériau hôte.

4. Système selon l'une quelconque des revendications 1 à 3, dans lequel le système comprend en outre :
une unité de détermination configurée pour déterminer l'authenticité d'un échantillon auquel l'au moins un marqueur photonique est ajouté en comparant l'intensité de photoluminescence résolue dans le temps de l'au moins un marqueur photonique avec un profil de photoluminescence prédéterminé de l'au moins un marqueur photonique à une température donnée.

5. Système selon l'une quelconque des revendications 1 à 4, dans lequel le dispositif électronique portable est choisi dans le groupe constitué par un téléphone intelligent et une tablette.

6. Procédé d'évaluation de la photoluminescence d'un marqueur photonique, le procédé comprenant les étapes consistant à :
fournir au moins un marqueur photonique comprenant un matériau hôte choisi dans le groupe constitué de CaS et Ba_{y}Sr_{1-y}S où 0 ≤ y ≤ 1, où le matériau hôte est dopé avec Eu²⁺ ;
exciter, par une unité d'excitation, l'au moins un marqueur photonique de sorte que l'au moins un marqueur photonique émette une photoluminescence, dont l'intensité décroît au fil du temps, dans lequel l'unité d'excitation est une source de lumière pulsée présentant une longueur d'onde d'excitation dans la plage de 300 à 700 nm ; et
détecter, par une unité de détection, l'intensité de photoluminescence de l'au moins un marqueur photonique de manière résolue dans le temps, dans lequel l'unité de détection est une caméra vidéo présentant une fréquence d'images supérieure ou égale à 20 fps et inférieure ou égale à 2000 fps, de préférence supérieure ou égale à 20 fps et inférieure ou égale à 1000 fps,
dans lequel le matériau hôte dopé avec Eu²⁺ est exprimé par Ca₁₋ₓS:Eu²⁺ₓ ou (Ba_{y}Sr_{1-y})₁₋ₓS:Eu²⁺ₓ où 0,0005 ≤ x ≤ 0,03, respectivement, de telle sorte qu'il y a une durée de vie de photoluminescence du marqueur photonique dans la plage allant de 0,001 à 10 s, de préférence dans la plage allant de 0,01 à 1 s, à température ambiante, et dans lequel au moins l'une parmi la source de lumière et la caméra vidéo fait partie d'un dispositif électronique portable.

7. Procédé selon la revendication 6, dans lequel le procédé comprend en outre l'étape consistant à :
déterminer l'authenticité d'un échantillon auquel l'au moins un marqueur photonique est ajouté en comparant l'intensité de photoluminescence résolue dans le temps de l'au moins un marqueur photonique avec un profil de photoluminescence prédéterminé de l'au moins un marqueur photonique à une température donnée.

8. Procédé selon la revendication 6 ou 7, dans lequel le dispositif électronique portable est choisi dans le groupe constitué par un téléphone intelligent et une tablette.

9. Produit programme d'ordinateur permettant d'évaluer la photoluminescence d'un marqueur photonique, dans lequel le produit programme d'ordinateur comprend des instructions lisibles par ordinateur, qui, lorsqu'elles sont chargées et exécutées par un processeur d'un dispositif électronique, amènent le dispositif électronique à réaliser un procédé comprenant les étapes consistant à : générer et émettre un signal d'excitation à une unité d'excitation permettant d'exciter au moins un marqueur photonique comprenant un matériau hôte choisi dans le groupe constitué par CaS et Ba_{y}Sr_{1-y}S où 0 ≤ y ≤ 1, dans lequel le matériau hôte est dopé avec Eu²⁺, de sorte que l'au moins un marqueur photonique émet une photoluminescence, dont l'intensité décroît au fil du temps, dans lequel l'unité d'excitation est une source de lumière pulsée ayant une longueur d'onde d'excitation dans la plage de 300 à 700 nm ; et
détecter, par une unité de détection, l'intensité de photoluminescence de l'au moins un marqueur photonique de manière résolue dans le temps, dans lequel l'unité de détection est une caméra vidéo présentant une fréquence d'images supérieure ou égale à 20 fps et inférieure ou égale à 2000 fps, de préférence supérieure ou égale à 20 fps et inférieure ou égale à 1000 fps,
dans lequel le matériau hôte dopé avec Eu²⁺ est exprimé par Ca₁₋ₓS:Eu²⁺ₓ ou (Ba_{y}Sr_{1-y})₁₋ₓS:Eu²⁺ₓ où 0,0005 ≤ x ≤ 0,03, respectivement, de telle sorte qu'il y a une durée de vie de photoluminescence du marqueur photonique dans la plage allant de 0,001 à 10 s, de préférence dans la plage allant de 0,01 à 1 s, à température ambiante, et dans lequel au moins l'une parmi la source de lumière et la caméra vidéo fait partie d'un dispositif électronique portable.

10. Produit programme d'ordinateur selon la revendication 9, dans lequel le procédé comprend en outre l'étape consistant à :
déterminer, par une unité de détermination, l'authenticité d'un échantillon auquel l'au moins un marqueur photonique est ajouté en comparant l'intensité de photoluminescence résolue dans le temps de l'au moins un marqueur photonique avec un profil de photoluminescence prédéterminé de l'au moins un marqueur photonique à une température donnée.

11. Produit programme d'ordinateur selon la revendication 9 ou 10, dans lequel le dispositif électronique portable est choisi dans le groupe constitué par un téléphone intelligent et une tablette.
